# Europäisches Patentamt

# European Patent Office

# Office européen des brevets

(19)

(11) Publication number: **0 050 287**
**A2**

(12)

# EUROPEAN PATENT APPLICATION

(21) Application number: **81108215.5**

(22) Date of filing: **12.10.81**

(51) Int. Cl.³: **G 05 D 23/19, F 24 F 11/00**

(30) Priority: **17.10.80 US 197839**
**17.10.80 US 197840**
**17.10.80 US 197841**
**17.10.80 US 197842**

(43) Date of publication of application: **28.04.82**
**Bulletin 82/17**

(84) Designated Contracting States: **CH DE FR GB IT LI NL**

(71) Applicant: **HONEYWELL INC., Honeywell Plaza, Minneapolis Minnesota 55408 (US)**

(72) Inventor: **Basset, William W., 16298 Ringer Road, Wayzata, Minn. 553391 (US)**
Inventor: **Nelson, Lorne W., 10118 Dupont Avenue South, Bloomington, Minn. 55431 (US)**
Inventor: **Bonne, Ulrich, 4936 Shady Oak Road, Hopkins, Minn. 55343 (US)**
Inventor: **Rask, Dean R., 5720 Pillsbury Avenue South, Minneapolis, Minn. 55419 (US)**
Inventor: **Torborg, Ralph H., 14025 Oakwood Road, Minnetonka, Minn. 55343 (US)**

(74) Representative: **Rentzsch, Heinz et al, Honeywell Europe S.A. Holding KG Patent- und Lizenzabteilung Kaiserleistrasse 55, D-6050 Offenbach am Main (DE)**

(54) **Control system for a temperature conditioning apparatus.**

(57) An integrated control system for a temperature conditioning apparatus which contains a microprocessor which is connected to the various components of a control system of the temperature conditioning apparatus such as the space thermostat, the fuel valve, the fuel igniter and ignition proving apparatus, the stack temperature sensor, the ambient or vestibule temperature sensor, the plenum temperature sensor, the induced draft blower motor, the refrigeration compressor, and the air circulating fan or blower. With the microprocessor, which has the capability of fast and many types of operations, the interaction of parameters of the temperature conditioning apparatus and operation of the various components of the system can be controlled in an improved manner to add to the overall efficiency of such a temperature conditioning apparatus.

HONEYWELL INC.

Honeywell Plaza

Minneapolis, Minn., USA

October 12, 1981

1008907/15/18/28 EP

Hz/umw

Control system for a temperature
conditioning apparatus

### Field of the invention

The invention relates to a control system according
to the preamble of claim 1.

### Background of the invention

Even though prior art heating and cooling apparatus had
fuel valve controls, plenum air temperature sensors,
air circulating fans, induced draft blowers for the
exhaust gases of a furnace, ignition and flame sensor
apparatus for proving that the ignition of the fuel
in the burner takes place, and many other parameter sensors,
all of which were a part of a control system for a
furnace or air conditioning compressor supplying heated
or cooled air to a space in which a thermostat was con-
tained, there has been a continual need for improvement
in such control systems. With the advent of increased
energy costs, an even greater demand has been shown for
more efficient heating and cooling apparatuses and
systems, especially for homes and dwellings wherein an
individual furnace and air conditioning supplies the
heated or cooled air to  the home as required by a
space thermostat.

-2-

It is therefore the object of the present invention to provide a control system making heating and cooling apparatuses more efficient. This object is achieved by the invention as claimed in claim 1. Further advantageous embodiments of the invention may be taken from the sub-claims.

## Summary of the invention

Different sensor means are provided at different locations and are connected to a control means which is controlling and monitoring the temperature conditioning apparatus. Said control means upon starting of an operation of the conditioning apparatus is energizing a power blower at a speed to provide a large amount of air to the combustion chamber and further is energizing a fuel control means for providing a low fuel flow into said combustion chamber so that the air to gas ration is higher than normally maintained. Abnormal operating conditions are sensed by the sensors, processed by the control means and indicated.

## Brief description of the drawings

The invention is shown in the enclosed drawings of which:

Fig. 1 is a schematic showing of a conventional forced air heating and cooling system.

Fig. 2A to D disclose the circuit diagram of a control module connecting the various components of the system to a microprocessor to provide the integrated control system.

Fig. 3   shows how figures 2A to 2B have
to be arranged.


## Description of the preferred embodiment
the invention

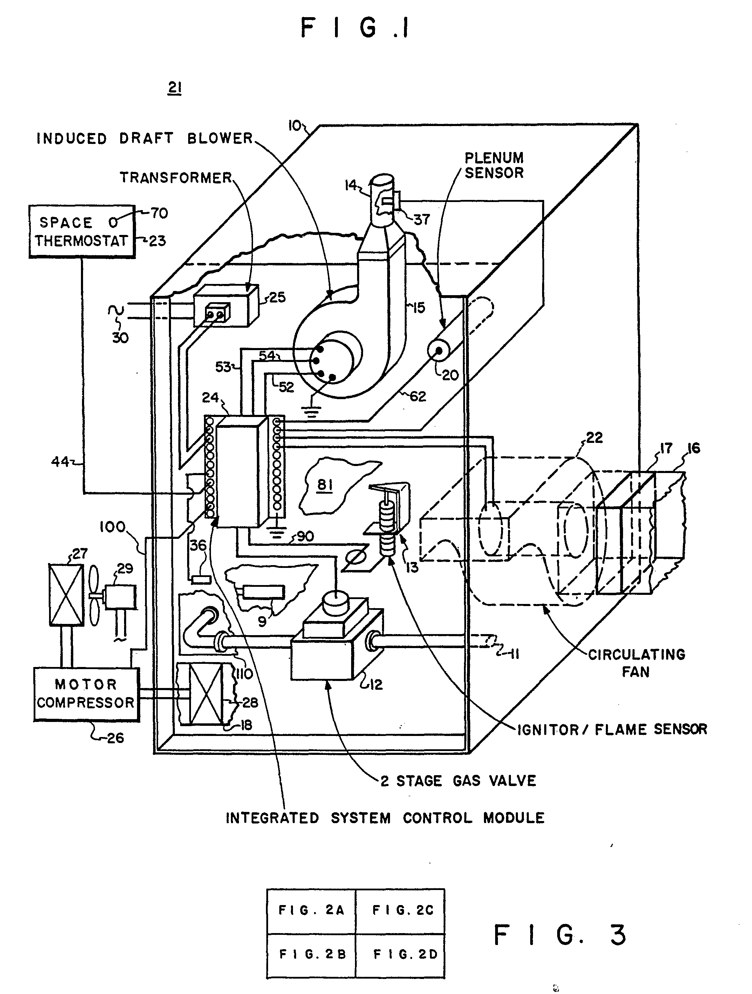

Referring to Fig.1, a conventional temperature conditioning apparatus boiler or furnace 10 is shown. The
furnace burner 9 receives fuel from a gas source
connected to pipe 11 and is controlled by a gas valve 12.
A secondary air opening 110 supplies air to combustion
chamber 81. Gas valve 12 may be of several types
such as the VR854 for two stage direct spark control
and the VR852 for two stage intermittent pilot control,
both made and sold by Honeywell Inc. and shown in
brochure 60-2447-2 of May 1980. The gas is ignited and a
flame is sensed by a conventional igniter and flame
sensor 13 such as the Q354 made by Honeywell Inc. and
shown in brochure 60-2053-8 of July 1980. The exhaust
gases from the furnace are forced out of an exhaust gas
stack or chimney 14 by a power blower 15 such as a
blower in the stack to provide an induced draft blower
(IDB) furnace. Blower 15 is driven by a conventional
shaded pole 120 volt A.C.motor having a Hall effect
sensor mounted on the motor shaft to provide a pulse
each revolution for a speed sensor and control circuit.

The temperature in the bonnet or plenum is sensed by
a temperature responsive element 20 such as a C800
Platinum  resinate sensor made and sold by Honeywell Inc.
and shown in brochure 60-2484 of November 1979. Temperature conditioned medium or air is circulated through
the plenum from a return duct 16 through a filter 17
to the space 21 through a supply duct 18 in a conventional manner by a circulator for a hydronic system or blower 22. The temperature responsive element or thermostat 23 such as a T87F thermostat made by Honeywell Inc. is located in the space connected to controls for the furnace. Thermostat 23 has an indicator light 70 to indicate certain system operating conditions to be mentioned. A conventional refrigeration compressor or heat pump 26 has an outdoor heat exchanger or coil 27 and an inddor heat exchanger or coil 28 which is mounted in supply duct 18. A fan driven by motor 29 removes heat from coil 27. Coil 28 is in the furnace plenum to deliver cool air during the air conditioning operation. Temperature sensors 36 and 37 (of the C800 type) are monted in the vestibule of the furnace and exhaust gas stack, respectively. Sensors 36 and 37 alternatively may also be arranged at coils 27 and 28. Sensor 36 responds to the vestibule or ambient air temperature in the proximity of the secondary air opening 110. Sensor 37 responds to the temperature of the exhaust gas or stack temperature of the induced draft blower furnace. An integrated system control module 24 which is supplied with power from a transformer 25 connected to a source of power 30, has all of the mentioned apparatus connected thereto for controlling the furnace and compressor.

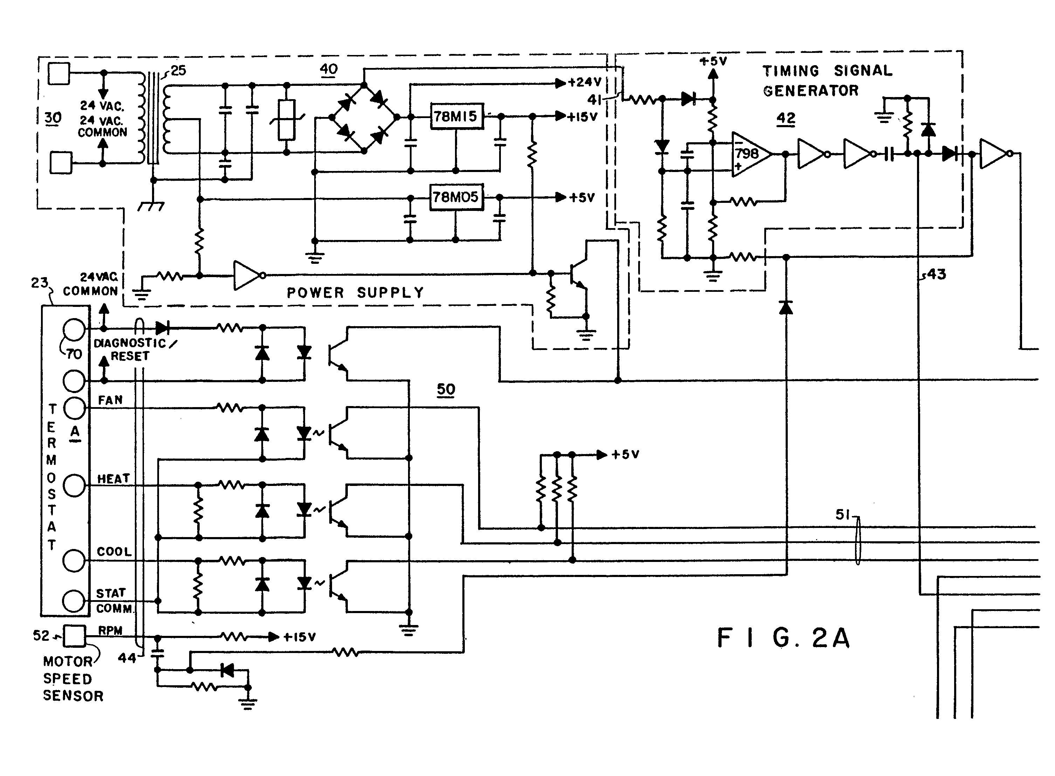

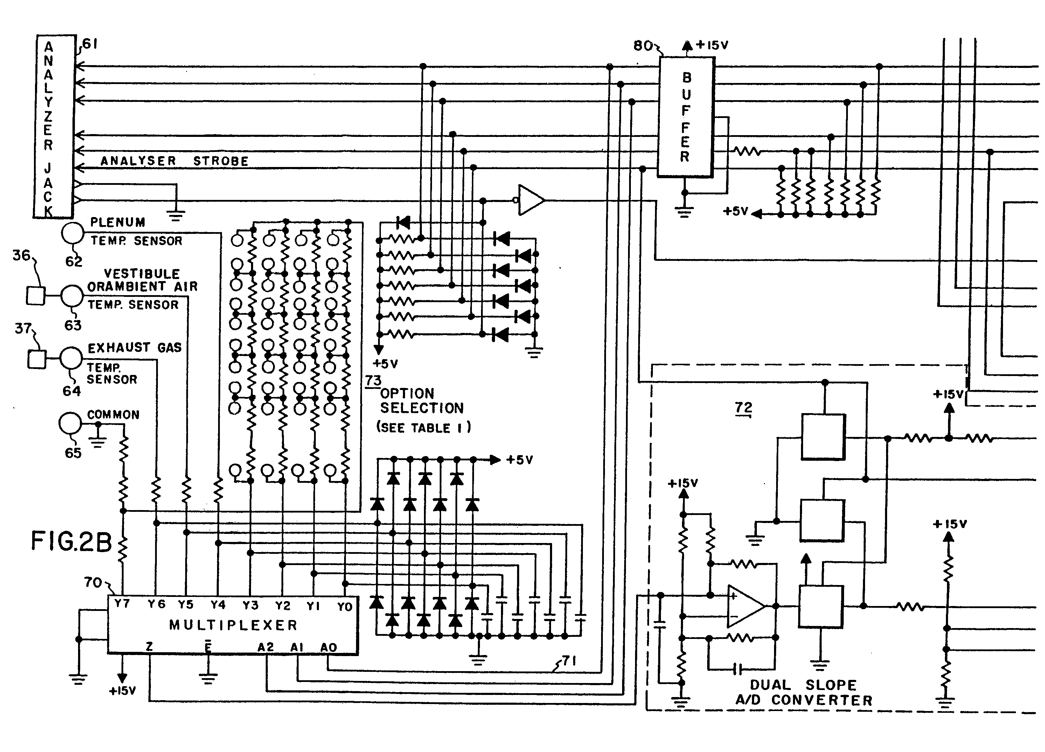

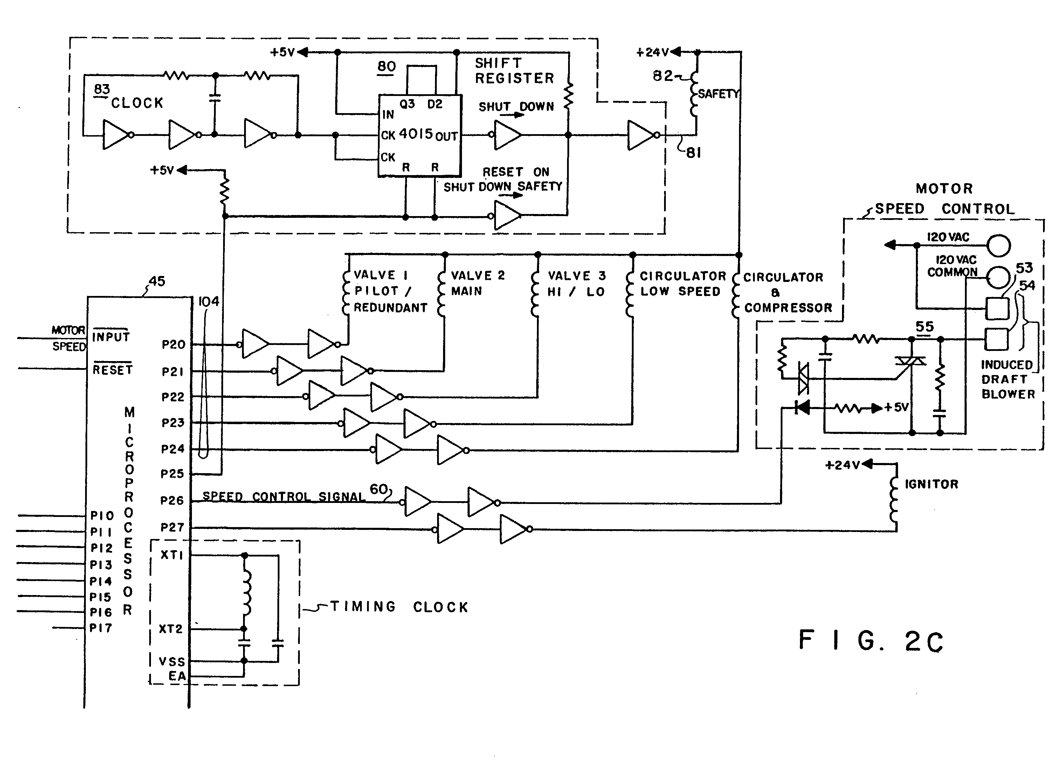

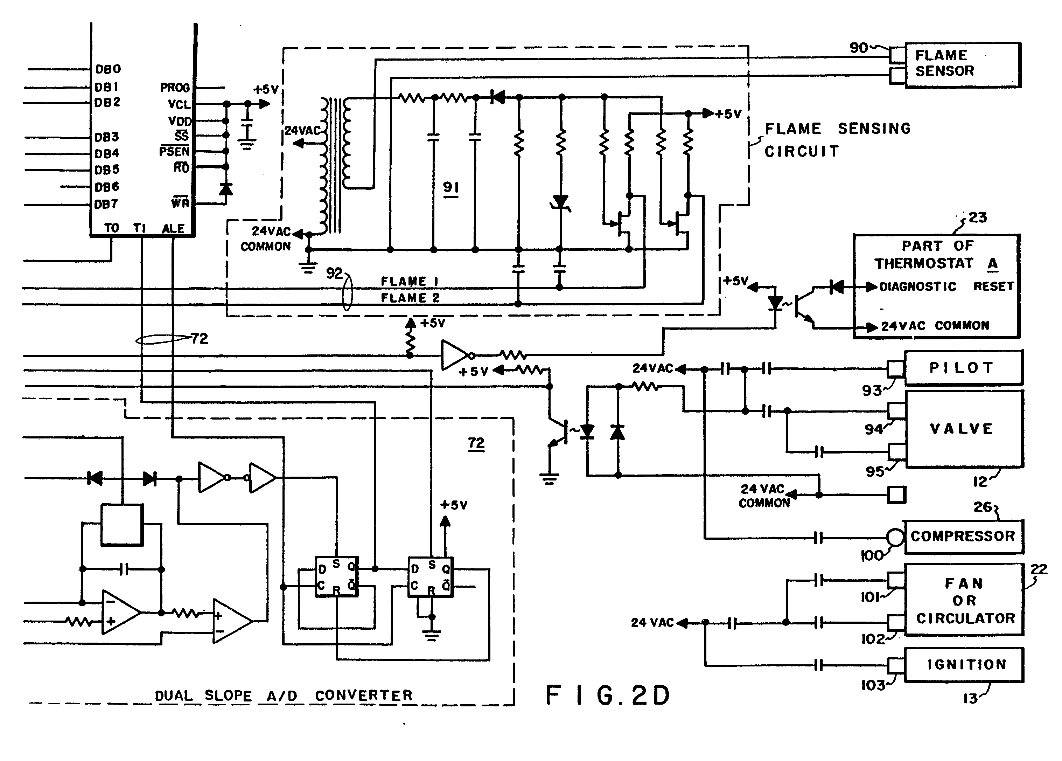

Referring to Fig. 2, which is made up of a composite of Fig. 2A to D, the schematic circuit of the integrated system control module 24 is shown in more detail. In Fig. 2A, transformer 25, which is connected to the power source 30, supplies power to an conventional power supply 40 which has one output 41 connected to a timing signal generator 42, which provides a 60Hz signal available over conductor 43. A thermostat 23 is connected over the six wire conductor 44 to the module 24.

The modul 24 has a microprocessor 45 of a conventional type known as the 8048 microprocessor which is made and sold by several different companies such as Intel, National Semi Conductor, and Nippon Electric Company. The microprocessor is programmed by one skilled in the art to perform the described operation. The microprocessor receives the signal from the timing signal generator 42 over conductor 43 at pin P14. Similary, the output of the thermostat 23 is connected through switching circuit 50 over the input conductors 51 to the microprocessor at pin P10, P11 and P12. Indication light 70 is connected to a diagnostic output of the microprocessor at 4. The induced draft blower 15 has two connections to the control module 24. A first connection 52 is from the motor speed sensor in the blower which comprises a conventional Hall effect transducer for providing a pulse on each revolution of the motor shaft and thus providing a revolution per minute signal or input 52. Two other connections 53 and 54 which are shown in Fig. 2C connect motor speed control 55 of the control module to the induced draft blower motor. The motor speed control receives a signal over the conductor 60 from pin P26 of microprocessor 45.

An input is provided at 61 in Fig.2B for a conventional analyzer which would be connected over a buffer 80 to the microprocessor for analyzing the operation of the system. Input circuit 62 is connected to plenum temperature responsive element or sensor 20. Input 63 connects a temperature responsive element or sensor 36 which senses the ambient or vestibule temperature of the furnace to control 24. Input 64 connects temperature responsive element or sensor 37 in the exhaust gas stack 14 to control 24. Connection 65 is a common

-6-

ground connection for many of the input circuits.

These sensors, that is the plenum sensor 20, air conditioning discharge coil temperature sensor 36, air conditioning indoor coil temperature sensor 37, are all connected to a conventional CMOS 4051 multiplexer 69 which provides an output over conductor 71 to a conventional analog to digital dual slope converter 72 providing the input to terminals T1 and ALE of the microprocessor over conductors 72.

An optional selection circuit 73 is shown on Figure 2B which provides for different arrangements of the circuit to the multiplexer in accordance with a selection table I as Appendix I. The optional selection can be accomplished by making different circuit connections either by breaking jumpers or using conventional pins to make selected connections.

Referring to Figure 2C, a shift register 80 has an output at 81 connected to a safety switch relay 82(K1). Referring to Figure 2D, input 90 provides the connection from the flame igniter and flame sensor 13 and is connected to the flame sensor circuit 91 of the type S825C made and sold by Honeywell Inc. and shown in brochure 60-2052-8 of July 1980, for providing a redundant signal over conductors 92 to the pins P13 and P15 of the microprocessor. Inputs 93, 94 and 95 are connected to the gas valve 12 and provide for a control of the pilot main valve and high fire valve when two stage burner operation is used. Output 100 is connected to the motor compressor. Output 101 and 102 are connected to a circulator for a hydronic system or circulation fan 22, and output 103 is connected to the igniter 13 when direct ignition is used. The output of the microprocessor from conductors 104 are connected to control a plurality of relays K2, K3, K4, K5 and K6, which have associated contacts with similar labels for controlling the various components connected to output circuits 94, 95, 100, 101, 102 and 103.

## Operation of the preferred Embodiment of the invention

Referring to Figure 1, when the space thermostat 23 calls for operating of the furnace, the induced draft blower 15 and the gas valve 12 are energized. With the normal fuel to air ratio , such a furnace is normally tested by Underwriters Laboratory to ensure that ignition of the burner takes place before the accumulation of gas is sufficient that the "roll out" of the burner occurs. "Roll out" is a result of the flame moving outside of the combustion chamber when a large accumulation of air and gas mixture downstream of the burner ignites. To ensure that such "roll out" doesn't take place, especially where a longer time for ignition and the proving of the existence of a flame is desired, the blower is operated at a high speed to have an over abundance of air and the valve 12 is energized at a low fuel flow or first stage. A normal (premixed) air to fuel ratio exists at the burner by

-8-

design 9; with excessive air (greater than 100%) provided by the induced draft blower, downstream of the burner in the combustion chamber 81, a high air to fuel ratio exists. Ignition of the gas at the burner takes place in a normal manner, but since the air to fuel ratio downstream of the burner is high, the gas in that area does not ignite and "roll out" does not occur even after excessive ignition delays. Such lends itself to direct ignition of the burner. The accumulation of gas in the combustion chamber is then limited and with the excessive air, when ignition does take place, "roll out" of the flame is a minimum.

As soon as the flame proving apparatus 13 senses the presence of combustion, the speed of the induced draft blower is left at high speed and the gas valve is operated at high fire (second stage) to ensure that the combustion chamber heats up as fast as possible to minimize rusting of the furnace by removing moisture from the furnace which is condensed by combustion products at the beginning of the combustion operation. After some predetermined time such as ninety seconds, when the combustion chamber is up to temperature, the gas valve 12 would be returned to the first stage of operation, or low fire, and the blower speed is reduced to its corresponding low speed (first stage of operation) to enhance efficiency.

The space thermostat 23 controls through the control device or microprocessor 24 the two stage gas valve 12. Upon a call for heat by the space thermostat, the induced draft blower is energized. After a predetermined delay gas valve 12 is energized to bring about an increase in the plenum temperature of the furnace and thus an operation of the furnace air circulation fan 22 to deliver heated air to the space 21. As the plenum temperature increases, the plenum temperature sensor 20 controls the capacity of valve 20 so that upon an increase in the plenum temperature to some predetermined value such as 7°C . below the limit temperature set for the furnace 10, the capacity of the gas valve 20 would decrease by deenergizing one stage of operation and only energizing a single stage. At the same time the speed of blower 15 might be reduced to maintain the correct air to fuel or gas ratio. Hot gases are exhausted from the stack as soon as ignition takes place by the ignition apparatus 13. Temperature sensor 20 responds to the temperature of the air in the plenum.

Sensor 20 operating through control module 24 operates as a high limit control and also as an operating temperature control at various other temperature levels. For example, module 24 receives the output of sensor 20 and when the temperature exceeds the normal operating temperature to reach 70°C, an excessive temperature indication is given by 70 on thermostat 23 of Figure 1. If the temperature of sensor 20 reaches 82°C, valve 12 is reduced to a low fire stage. If the sensor reaches 93°C, valve 12 is cycled on and off whereby any further increase in the operating temperature results in the gas supply being 100% off. Module 24 using the output of sensor 20 also provides the control of fan 22to turn the circulation off when the furnace output temperature is below 35°C.

Air is received from the return air duct 16 through the filter 17 by the fan 22 and delivered to the space 21 through a supply duct 18, except in connection with the refrigeration heat exchanger coil 28 which would be used when the refrigeration apparatus were used for heating and/or cooling.

Unter normal operation, the plenum temperature or furnace output remains substantially the same as with a predetermined fuel flow through valve 12 and a predetermined air flow into the combustion chamber as determined by the speed of the fan 15 in the exhaust duct. Upon a change in the plenum temperature such as an increase in the temperature during heating, unless other conditions of the system changed which are known to the control module 24, an abnormal condition would be taking place. The increase in the plenum temperature is brought about if the air flow through the plenum were reduced as the transfer of heat from the combustion chamber is reduced. Such an increase in the plenum temperature is indicative of a blocked air duct, a slowing down or stoppage of the circulating fan 22, and/or a blocking of the filter 17 as the filter becomes dirty.

By means of an indication light or diagnostic indicator 70 on the space thermostat which is connected to an output of the microprocessor 24 over conductors 44, when the control module 24 senses a change in the plenum temperature which deviates from the normal temperature and is not caused by a program change in the normal operation of the temperature conditioning apparatus, such an abnormal condition will be indicated by indicator 70. When the abnormal condition such as an increase in temperature of the plenum during the normal operation can be overcome such as by the reductionof the fuel flow to the burner, the control 24 reduces the fuel flow of the gas valve 12 by switching the gas valve from a high stage of operation to a lower stage of operation.

As earlier mentioned the furnace 10 has the induced draft blower 15 in the exhaust stack 14. Upon a call for heat by the space thermostat 23, the induced draft blower 15, valve 12, and ignition apparatus 13, are operated to bring about the ignition of the fuel burner 9 and thus the operation of the furnace. During normal operation of the furnace, air that is drawn into the combustion chamber 81 generally passes through the vestibule of the furnace in which temperature responsive element 36 is mounted to respond to the vestibule air temperature which is generally the ambient air temperature surrounding the furnace. As the furnace operates and the exhaust gases passing through the exhaust stack 14 increase in temperature, the temperature of the temperature responsive element 37 increases and a predetermined temperature differential exists between the temperature of element 37 and the ambient air temperature or element 36 for normal operating periods.

-12-

Upon the existence of an abnormal condition to block the air flow out of stack 14, such would be a condition as a normal foreign object in the stack or ice developing in the stack, the flow of exhaust gases out of the stack decreases. The temperature of temperature responsive element 37 decreases and the lowering of the differential between the temperature of sensor 37 and the ambient temperature at 36 provides a signal through control module 24 to show that an abnormal condition existed. Either the operation of the furnace is stopped by control 24 or an indication of such abnormal condition is indicated at indicator 70 on the space thermostat 23.

After some predetermined time of normal operation of the furnace, the differential temperature between the exhaust gas temperature and ambient temperature or vestibule temperature whichever two sensors are used for control shall not be less than a first predetermined value. The first predetermined value is a preprogrammed value stored in a memory of the microprocessor 45. Upon an abnormal flow of exhaust gases in stack 14, the differential temperature will either fall below or not reach the first predetermined value. Upon the differential temperature falling below or not reaching the first predetermined temperature, the microprocessor recognizes an unsafe condition and the system is modified or shut down.

-13-

TABLE I

SELECTABLE OPTIONS

| DESCRIPTION | NUMBER OF CHOICES | REMARKS |
|---|---|---|
| SAFETY LIMIT | 5 | -185, 200, 215, 230, 245°F (TO BE FIELD SELECTABLE) DIFFERENTIAL -15°F ± 5°F CALIBRATION ACCURACY - ± 8°F. |
| IGNITION TYPE | 2 | DSI OR I.P. |
| FLAME ESTABLISHMENT PERIOD | | |
|   - DSI. MAIN BURNER | 5 | 4, 6, 11, 21, 60 SEC |
|   - I.P. - PILOT | 2 | 15 & 90 SEC |
| PRE-PURGE | 2<br>3 | 0 & 25 SEC FOR GAS (0, 25 & 45 SEC FOR OIL) |
| POST PURGE | 1<br>2 | 0 SEC FOR GAS (0 & 20 SEC FOR OIL) |
| VALVE | 2 | SINGLE OR 2 STAGE |
| DRAFT | 2 | INDUCED OR NATURAL (INDUCED DRAFT MANDATORY W/2 STAG |
| * SYSTEM TYPE | 2 | HIGH OR LOW MASS |
| * TRIALS FOR IGNITION (AUTO RE-CYCLE) | 2 | 3 FOR GAS 1 FOR OIL |

APPENDIX I

Claims:

1. Control system for a temperature conditioning apparatus furnishing temperature conditioned air to a space, comprising within said conditioning apparatus a burner, fuel control means, fuel ignition means, flame sensor means and a power blower for delivering exhaust gases from a combustion chamber to an exhaust stack, whereat a control means is connected to a space temperature sensor for controlling the space temperature by actuating of said conditioning apparatus, c h a r a c t e r i - z e d   i n   t h a t   the control means (24) is connected to a further sensor (20) mounted within the plenum of said temperature conditioning apparatus (10) for monitoring its proper operation.

2. System according to claim 1, c h a r a c t e r i- z e d   i n   t h a t   a sensor means (37) is arranged in the exhaust gas output (14) and is connected to the control means (24) for indicating an abnormal operating condition of the temperature conditioning apparatus (10) in the event of a decrease of the exhaust gas temperature.

3. System according to claim 1, c h a r a c t e r i z e d i n   t h a t   said control means (24), upon starting of an operation of the conditioning apparatus (10), is energizing said power blower (15) at a speed to provide a large amount of air to the combustion chamber (81) and is energizing said fuel control means (12) for providing a low fuel flow into said combustion chamber so that the air to gas ratio is higher than normally maintained.

4. System according to claim 1, c h a r a c t e r i z e d i n t h a t said plenum sensor (20) is a flow sensor effected by a decrease in air flow caused by a clogged filter (17).

5. System according to claim 1, c h a r a c t e r i z e d i n t h a t said plenum sensor (20) is a temperature sensor effected by a decrease in air flow caused by a clogged filter (17).

6. System according to claim 1, c h a r a c t e r i - z e d i n t h a t said control means (24) upon said plenum sensor (20) responding to an abnormal condition acts upon said fuel control means (12) to reduce fuel supply.

7. System according to claim 6, c h a r a c t e r i - z e d i n t h a t said fuel means is a multistage valve (12).

8. System according to claim 1, c h a r a c t e r i - z e d i n t h a t said control means (24) upon a first increase of temperature to a first level is energizing a visual indicator (70), upon a second increase of temperature to a second level provides a signal to reduce the operation of said conditioning apparatus (10), and upon a third increase of temperature to a third level provides a signal for turning off said conditioning apparatus (10).

9. System according to claim 8, c h a r a c t e r i - z e d i n t h a t said operation of said conditioning apparatus (10) is reduced by reducing the speed of said power blower (15).

10. System according to claim 2, c h a r a c t e r i - z e d  b y  an ambient temperature sensor (36) connected to said control means (24) for sensing the ambient temperature of the conditioning apparatus (10) with said control means (24) responding to a predetermined difference between the temperature of the exhaust gas and the ambient temperature.

11. System according to claim 10, c h a r a c t e r i - z e d  i n  t h a t  the difference between the exhaust gas temperature and the ambient temperature is compared with a preprogrammed differential temperature stored in said control means (24) in order to modify the operation of the conditioning apparatus (10) accordingly.

12. System according to claim 3, c h a r a c t e r i - z e d  i n  t h a t  said conditioning apparatus is a furnace (10) and said power blower (15) is connected between the combustion chamber (81) of said furnace (10) and an exhaust stack (14) with said blower (15) having at least two speeds.

13. System according to claim 12, adapted for use in a gas furnace, c h a r a c t e r i z e d  i n  t h a t  the air to gas ratio is high to avoid rolling out of the combustion flame at the burner upon ignition of the gas and to allow more time to prove the existence of a burner flame.

14. System according to claim 13, c h a r a c t e r i - z e d  i n  t h a t  said high air to gas ratio is made with nearly 100% excessive air.

-17-

15. System according to claim 7 and 14, c h a r a c -
t e r i z e d   i n   t h a t   said control means (24)
is comprising timer means started by a signal of
the flame sensor means (13), that initially
the multistage valve (12) is energizing for high
fire for a  predetermined time given by the timer
means in order to shorten the condensation time
of the products of combustion.

16. System according to claim 1 or one of the following
claims, c h a r a c t e r i z e d   i n   t h a t said
control means (24) is a microprocessor.

**FIG .1**

0050287

1/5

| FIG. 2A | FIG. 2C |
|---------|---------|
| FIG. 2B | FIG. 2D |

**FIG. 3**

TIMING SIGNAL GENERATOR 42

POWER SUPPLY

F I G. 2A

0050287

FIG.2B

DUAL SLOPE A/D CONVERTER

OPTION SELECTION (SEE TABLE I)

MULTIPLEXER

FIG. 2C

FLAME SENSOR 90

23 PART OF THERMOSTAT A — DIAGNOSTIC RESET — 24 VAC COMMON

PILOT 93

VALVE 94 95 12

26 COMPRESSOR 100

FAN OR CIRCULATOR 22 101 102

IGNITION 103 13

FLAME SENSING CIRCUIT

+5V

FLAME 1 FLAME 2

91

92

24VAC

24VAC COMMON

24 VAC COMMON

+5V

72

DUAL SLOPE A/D CONVERTER

DB0 DB1 DB2 DB3 DB4 DB5 DB6 DB7

PROG VCL VDD SS PSEN RD WR

TO T1 ALE

D S Q C R Q̄

F I G. 2D